# FASCICULE DE BREVET EUROPEEN

(11) **EP 0 341 133 B1**
(45) Date de publication et mention de la délivrance du brevet: **24.02.1993**
(21) Numéro de dépôt: 89401188.1
(22) Date de dépôt: 26.04.1989
(51) Int. Cl.: F16F 15/12

(54) **Dispositif amortisseur de torsion à flans élastiques, notamment pour véhicule automobile**
Torsionsschwingungsdämpfer mit elastischen Flanschen, insbesondere für Kraftfahrzeuge
Torsion vibration damper with resilient flanges, in particular for motor vehicles

(30) Priorité: 06.05.1988 FR 8806102; 17.03.1989 FR 8903545
(43) Date de publication de la demande: 08.11.1989
(73) Titulaire: VALEO, 75017 Paris (FR)
(72) Inventeur: Focqueur, Hervé, F-95130 Franconville (FR); Jumel, Bernard, F-75014 Paris (FR); Paquin, Jacques, F-92390 Villeneuve-la-Garenne (FR); Naudin, Jacky, F-95120 Ermont (FR)
(74) Mandataire: Gamonal, Didier

(56) Documents cités:
- FR-A- 2 499 182
- FR-A- 2 546 251
- GB-A- 2 087 043
- US-A- 3 387 505

## Description

La présente invention concerne un dispositif amortisseur de torsion, en particulier une friction d'embrayage pour véhicule automobile, du genre comportant au moins deux parties coaxiales, l'une comprenant un support l'autre un moyeu, montées rotatives l'une par rapport à l'autre dans les limites d'un débattement angulaire déterminé et à l'encontre de moyens élastiques juxtaposés travaillant en parallèle formés chacun dans un flan élastique comportant au moins un bras élastiquement déformable et deux éléments porteurs, ledit bras s'étendant entre lesdits éléments porteurs avec l'un au moins desquels il se raccorde d'un seul tenant par une zone d'enracinement, l'un desdits éléments porteurs étant apte à être solidarisé en rotation avec l'une desdites parties rotatives, tandis que l'autre élément porteur est apte à être solidarisé en rotation à l'autre desdites parties rotatives.

Un tel dispositif selon le préambule de la revendication 1 est décrit dans le document US-A-4 496 036 (FR-A-2 493 446).

Dans ces documents on a proposé de juxtaposer les flans élastiques en les disposant tête-bêche pour éviter un déplacement du centre de l'ensemble en fonctionnement.

Une telle disposition n'est pas encore entièrement satisfaisante. En effet, bien que les forces résultant de la disposition soient radialement opposées d'un flan à l'autre, il se crée du fait du décalage axial desdits flans un couple de basculement néfaste. Par exemple lorsque les flans sont solidarisés en rotation à un moyeu coulissant, celui-ci risque alors de se coincer, l'un des flans exerçant une force radiale à l'une des extrémités axiales du moyeu, sur la partie supérieure de celle-ci, tandis que l'autre des flans exerce une force radiale en sens inverse de la précédente à l'autre extrémité axiale du moyeu, sur la partie inférieure de celui-ci.

Il en est de même lorsque le moyeu est monté sur le roulement interposé entre ledit moyeu et une pièce support appartenant à l'autre partie, le couple de basculement créant des contraintes nuisibles notamment pour la durée de vie dudit roulement.

La présente invention a pour objet de pallier cet inconvénient et donc de minimiser le couple de basculement au sein de l'amortisseur, tout en procurant d'autres avantages.

Suivant l'invention, un dispositif du genre précité est caractérisé en ce qu'il comporte au moins deux paires de flans élastiques semblables par leurs bras élastiquement déformables, l'une des paires étant encadrée par les flans de l'autre paire et étant décalée angulairement par rapport à l'autre desdites paires en sorte que lesdites paires s'équilibrent radialement, les bras d'une même paire étant phasés.

Grâce à l'invention il y a un équilibrage entre les deux paires. Avec deux paires le décalage angulaire est de 180°, avec trois paires il est de 120°, avec quatre paires il est de 90° ou 180°.

Grâce à cette disposition le moyeu, et son arbre associé, subit une flexion sur une distance courte et les forces radiales au sein de l'amortisseur sont négligeables.

En outre, le coulissement du moyeu sur son arbre n'est pas entravé ou lorsqu'un roulement intervient entre le moyeu et une autre pièce de l'autre partie, ledit roulement est ménagé.

On appréciera que la durée de vie du dispositif amortisseur de torsion est augmentée, que son équilibrage s'en trouve facilité, et que la présence d'un voile de moyeu traditionnel n'est plus nécessaire.

Grâce à l'équilibrage selon l'invention la zone d'enracinement du bras peut être dimensionnée pour subir des contraintes importantes et le bras peut s'étendre sur plus de 360°, en sorte qu'il est possible d'obtenir avec un seul bras par flan et des flans peu épais un grand débattement angulaire relatif entre le moyeu et le support tout en transmettant un couple important ; le dispositif étant bien équilibré, même en fin de débattement.

Les flans élastiques analogues ou semblables peuvent avoir des bras élastiques identiques d'une paire à l'autre et être différents par leurs éléments porteurs, mais de préférence dans le cas de deux ou trois paires tous les flans sont identiques entre eux.

Suivant une forme de réalisation le bras élastique est établi entre deux rondelles porteuses, l'une interne, l'autre externe, la rondelle externe étant dotée d'au moins une languette radiale pour liaison en rotation avec un support.

Grâce à cette disposition la liaison en rotation entre le support et les flans peut être réalisée à l'aide d'entretoises traversant des ouvertures pratiquées dans les languettes et le support.

La description en annexe illustre l'invention à titre d'exemple, en référence aux dessins annexés dans lesquels :
- la figure 1 est une vue en perspective simplifiée d'une première réalisation selon l'invention ;
- la figure 2 est une vue en coupe axiale pour cette réalisation ;
- la figure 3 est une vue partielle schématique de face montrant l'agencement des moyens élastiques de faible raideur ;
- la figure 4 est une vue de face pour une autre variante de réalisation selon la flèche 4 de la figure 5 ;
- la figure 5 est une vue en coupe axiale pour de cette autre variante de réalisation ;
- la figure 6 est une vue en coupe axiale pour un troisième exemple de réalisation.

Dans les formes de réalisation illustrées le dispositif amortisseur de torsion, pour véhicule automobile, comporte deux parties coaxiales, l'une excitante A, l'autre excitée B, montées rotatives l'une par rapport à l'autre dans les limites d'un débattement angulaire déterminé et à l'encontre de moyens élastiques aptes à agir circonférentiellement entre elles.

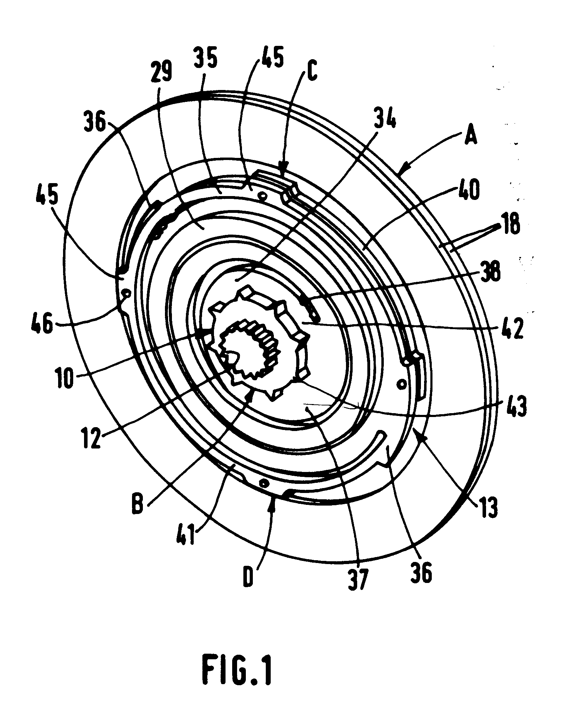

Dans les figures 1 à 5 il s'agit d'une friction d'embrayage, pour véhicule automobile, et la partie excitée B comporte un moyeu 10 propre à être engagé sur l'arbre d'entrée de la boîte de vitesses présentant une portion cannelée pour coopération avec des cannelures 12 complémentaires que présente l'alésage interne du moyeu 10 et liaison en rotation avec celui-ci.

La partie excitante A comporte un support 13, qui s'étend transversalement autour du moyeu 10 et porte des garnitures de frottement 18.

Ce support 13 est destiné à être serré par ses garnitures 18 entre un plateau de pression et un plateau de réaction (non visible) solidaires de l'arbre moteur.

Lesdits moyens élastiques comportent des bras élastiquement déformables 29 établis chacun entre deux éléments porteurs, l'un interne 34, l'autre externe 35, ledit bras 29 se raccordant d'un seul tenant par une zone d'enracinement 36 avec l'un 35 desdits éléments porteurs solidaire en rotation du support 13, tandis que l'autre 34 desdits éléments porteurs est muni de moyens d'entraînement, propres à le solidariser en rotation à l'autre desdites parties rotatives pour une plage au moins du débattement angulaire entre celles-ci.

Chaque bras 29 avec ses éléments porteurs 34, 35 appartient à un flan élastique 40, 41 s'étendant transversalement par rapport à l'axe de l'ensemble.

Les flans 40, 41 sont juxtaposés en étant échelonnés axialement et travaillent en parallèle.

Suivant l'invention, le dispositif amortisseur de torsion est caractérisé en ce qu'il comporte au moins deux paires C, D de flans élastiques semblables par leurs bras 29 élastiquement déformables, l'une C des paires étant encadrée par les flans de l'autre paire D et étant décalée angulairement par rapport à l'autre paire D en sorte que lesdites paires s'équilibrent radialement, les bras 29 d'une même paire étant phasés.

A la figure 1, on voit en 40 l'un des flans de la première paire C, et en 41 l'un des flans de l'autre paire D, le support 13 étant inséré centralement entre les flans 40 de la première paire C.

Le bras 29 unique s'étend sur plus de 360° et a une forme de spirale.

Les paires C et D sont montées tête-bêche l'une par rapport à l'autre c'est-à-dire à 180° l'une par rapport à l'autre.

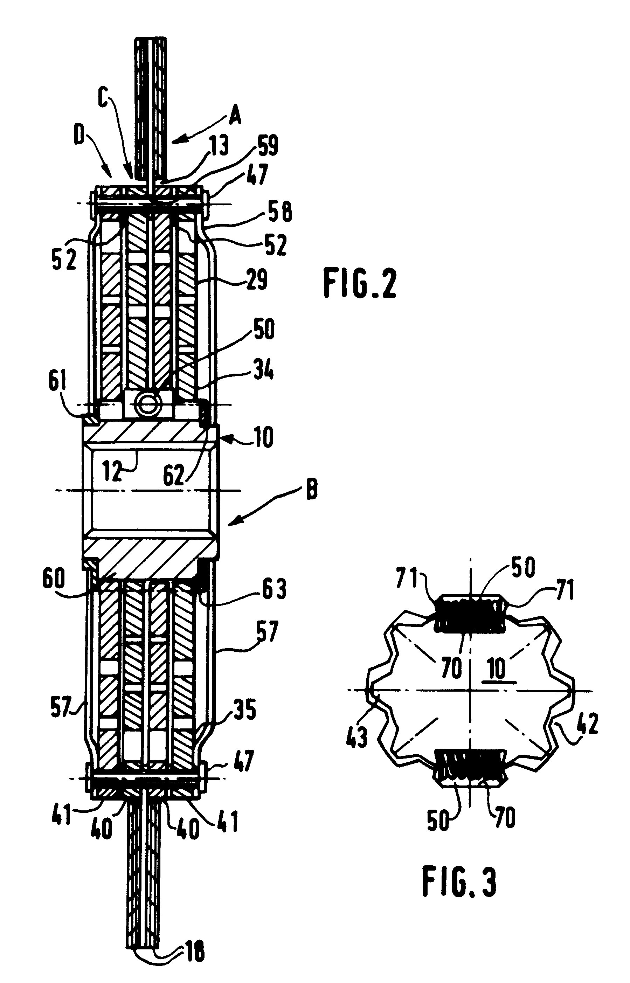

Pour bien montrer la forme des flans élastiques, à la figure 1, on n'a pas représenté le dispositif de frottement interne ainsi que les rondelles de fermeture décrits ci-après et visibles à la figure 2.

Pour chacun des flans 40, 41 l'élément porteur interne 34 présente un jeu de dentures 42 de forme trapézoïdale propre à coopérer avec un jeu de dentures 43 trapézoïdal commun aux quatres flans 40, 41 que présente le moyeu 10 de manière complémentaire pour liaison en rotation, après un rattrapage d'un jeu dudit élément 34 avec le moyeu 10.

Pour formation d'une zone d'enracinement 37 robuste avec l'élément porteur interne 34, le bras 29 longe circonférentiellement ledit élément 34, sous forme de rondelle, en étant séparé de celui-ci par une fente 38 dont l'extrémité borgne forme un épanouissement à contour circulaire excentré.

L'élément porteur externe 35 a également la forme d'une rondelle dotée extérieurement en saillie radiale d'une pluralité de languettes 45 dans lesquelles sont pratiquées des ouvertures 46 propres à être traversées par des colonnettes 47 en forme de rivets visibles à la figure 2.

La zone d'enracinement 36 du bras 29 à la rondelle 35 s'étend également en saillie radiale sur la même hauteur que les languettes 45 mais circonférentiellement sur une longueur plus grande pour une bonne robustesse.

Cette zone 36 fait partie du jeu de languettes 45 en étant également dotée d'une ouverture 46. Elle forme un détrompeur pour le montage en constituant ici l'une des quatre languettes réparties régulièrement circulairement le long de la rondelle 35. Du fait du phasage les zones 36 des flans d'une même paire de flans sont axialement dans le prolongement l'une de l'autre, avec un décalage de 180° des zones 36 d'une paire à l'autre.

Les flans 40, 41 sont dotés de bras 29 identiques entre eux et ont une épaisseur constante en étant plats et réalisés par découpe à la presse d'un flan métallique peu épais, lesdits flans étant ensuite traités thermiquement avec au besoin une opération de grenaillage.

Ils sont montés avec un jeu angulaire par rapport au moyeu 10 leurs dentures 42 engrenant à jeu avec les dentures 43 du moyeu 10.

Ces flans 40, 41 sont semblables, seul leurs éléments porteurs internes 34 étant différents.

Plus précisément (figure 3) on pratique des échancrures 70 dans les dentures 42, 43 respectivement des flans 40 et du moyeu 10 pour logement de moyens élastiques, ici sous forme de ressorts à boudins, s'appuyant sur les extrémités latérales desdites échancrures par l'intermédiaire de plaquettes 71 en forme de dièdre communes aux deux flans 40, comme décrit dans la demande FR-A-2 270 491.

La raideur des ressorts 50 est nettement plus faible que celle des bras 29.

Bien entendu pour une bonne standardisation on peut également pratiquer des échancrures 70 dans les flans 41.

A la figure 2, on voit que les entretoise 47 traversent des ouvertures pratiquées dans des rondelles 52, en forme de couronne, interposées chacune axialement entre l'un des flans 40 et l'un des flans 41.

Les extrémités épanouies des entretoises 47 sont après montage au contact de rondelles de fermeture 57, présentant chacune des ouvertures traversées par lesdites entretoises 47 formant organe de fixation.

Ces rondelles 57 sont dotées chacune d'une portion externe 58 décalée axialement par rapport à la partie principale de ladite rondelle et accolée à la rondelle 35 du flan 41.

Le support 13 constitue une rondelle intercalaire entre les flans 40 et est traversé par les entretoises 47 à la faveur d'ouvertures 59 qu'il présente à cet effet.

La position centrale du support 13 favorise une bonne répartition des efforts et une bonne perpendicularité des garnitures 18.

Il en est de même en ce qui concerne les ressorts 50 qui assurent indirectement grâce au montage décrit ci-dessus, le centrage des flans 41.

Les dentures 43 sont formées dans une surépaisseur 60 du moyeu 10.

Pour formation d'un dispositif de frottement interne, un palier annulaire à section en forme de L 61 est inséré entre le moyeu 10, la surépaisseur 60 et l'une des rondelles de fermeture 57, tandis qu'un élément élastique à action axiale 62, sous forme de rondelle Belleville, s'appuie sur l'autre rondelle 57 et sollicite axialement une rondelle de répartition 63 au contact de la surépaisseur 60, ladite rondelle 63 étant dotée d'une pluralité de pattes axiales coopérant chacune avec des ouvertures pratiquées dans la rondelle 57 concernée pour liaison en rotation avec celle-ci.

Le dispositif fonctionne de la manière suivante :
- dans une première phase, les flans 40, 41 se déplacent angulairement par rapport au moyeu 10, à l'encontre des ressorts 50 avec intervention du dispositif de frottement 61, 62, 63, jusqu'à ce que le jeu entre les dentures 42, 43 soit rattrapé,
- dans une deuxième phase les flans 40, 41 interviennent et le support 13 se déplace angulairement par rapport au moyeu 10 à l'encontre des bras 29, avec travail en parallèle desdits bras 29.

Ainsi les élements porteurs internes 34 sont par la suite solidaires en rotation du moyeu 10 pour une plage au moins du débattement angulaire entre le moyeu 10 et le support 13.

On appréciera qu'il est possible d'obtenir un grand débattement angulaire relatif entre le moyeu 10 et le support 13 grâce à l'invention permettant l'utilisation de bras élastiquement déformables de grande longueur tout en étant capables de subir les mêmes contraintes que par le passé. L'utilisation d'un seul bras permet en outre pour ce niveau de débattement de ne pas faire travailler le bras à spires jointives ce qui améliore la durée de vie de celui-ci et son endurance.

Les forces radiales au sein de l'amortisseur sont négligeables ainsi que les couples de basculement du fait du montage tête-bêche des flans 40, 41.

On appréciera qu'un bon coulissement du moyeu 10 sur l'arbre de la boîte de vitesses est obtenu.

Tout ceci est favorable à une bonne libération des garnitures 18 vis-à-vis des plateaux de pression et de réaction lors de l'opération de débrayage. En outre le palier 61 ne risque pas d'être endommagé par la rondelle 57 du fait du bon équilibrage de l'ensemble.

En variante les ressorts 50 et les échancrures associées 70 peuvent être supprimés, les flans 40, 41 étant identiques et engrenant par leurs dentures 42 sans jeu avec les dentures 43 du moyeu 10.

Si besoin est, les ouvertures 59 du support 13 peuvent être de forme oblongue pour accouplement avec jeu du support 13 au moyeu 10 par les bras 29.

Ainsi qu'il ressort à l'évidence de la description les dentures 42, 43 facilitent le montage de la friction d'embrayage, le moyeu 10 ayant une forme simple. Ledit moyeu peut être en matériau fritté permettant un bon coulissement de celui-ci sur l'arbre de la boîte de vitesses, tout en permettant de procurer une bonne dureté à la surépaisseur 60.

On appréciera que la zone d'enracinement 36 permet de monter les flans 40, 41 dans la bonne orientation.

Bien entendu des moyens élastiques peuvent être constitués en un matériau composite à matrice organique armée de filaments, les filaments formant une armature de fils continue orientée dans le sens d'enroulement du bras élastiquement déformable 29 comme décrit dans le document FR-A-2 611 013.

Il est possible de prévoir trois paires de flans ou plus.

Dans le cas de trois paires, la troisième paire encadre la deuxième paire, qui elle-même encadre la première paire, le décalage d'une paire à l'autre étant de 120°.

Pour quatre paires on prévoit le même processus en ce qui concerne l'encadrement des paires (chaque paire étant encadrée par la paire suivante), mais le décalage est ici de 180° d'une paire à l'autre.

On notera que les deux paires extrêmes peuvent être constituées, à partir de flans élastiques différents, notamment en épaisseur, de ceux des paires centrales. Il est alors possible de doter les paires extrêmes de dentures engrenant avec les dentures du moyeu avec un jeu différent de celui prévu entre les dentures du moyeu et les dentures des paires centrales.

Grâce à cela on obtient une intervention différée des paires et l'on augmente le nombre des pentes de la friction d'embrayage.

Les quatre paires peuvent être décalées de 90°, l'une par rapport à l'autre, mais dans ce cas les flans sont de préférence tous analogues, leurs bras 29 étant identiques.

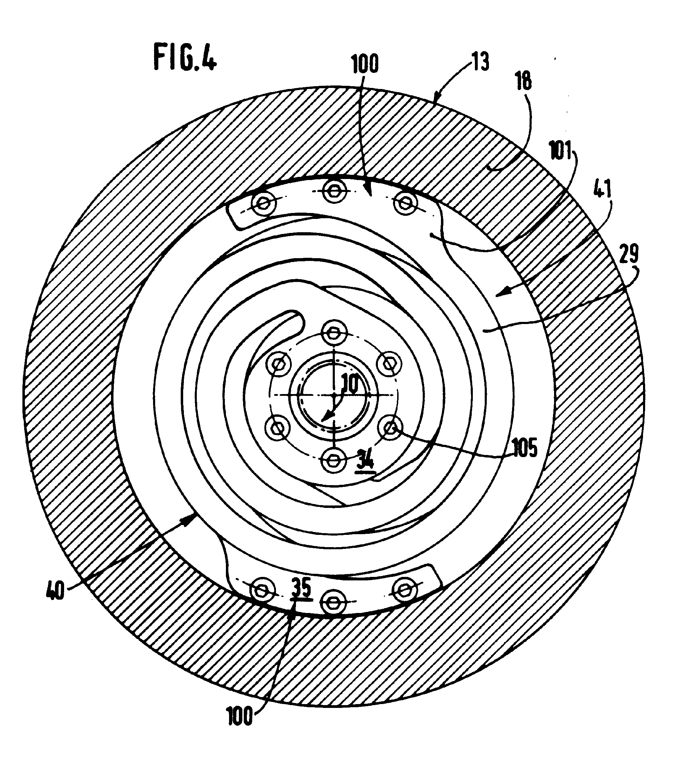

L'élément porteur externe 35 peut consister en une simple languette 100 (figures 4 et 5) comportant au moins une ouverture 46 traversée par l'une des colonnettes 47.

Ainsi dans ces figures 4 et 5 la languette 100 s'étend circonférentiellement sur une plus grande étendue que la languette 36 de la figure 1 et comporte trois trous 46.

Cette languette 100 est dans le prolongement de la périphérie externe du bras 29, tandis qu'elle se raccorde à la périphérie externe dudit bras 29 par un congé 101 accroissant l'épaisseur de la languette 100 par rapport au bras 29 et donnant de la robustesse à la zone d'enracinement par diminution des contraintes dans celle-ci , le rayon du congé étant augmenté par rapport à celui de la figure 1. Ladite languette 100 a un contour périphérique annulaire et s'effile en direction de son extrémité libre.

Le moyeu 10 possède latéralement à l'une de ses extrémités axiales une bride radiale 102 à périphérie externe épaulée en 103 pour appui de l'extrémité libre du palier 61.

La rondelle de fermeture 57 coopère avec le palier 61 en ayant à sa périphérie interne en section un profil de L inversé.

Les moyens élastiques 62 et la rondelle de répartition 63 sont interposés entre le palier 61 et l'un des flans 41.

Dans ce cas la présence de l'autre rondelle de fermeture n'est plus nécessaire.

Les languettes 100 recouvrent partiellement chacune un bras 29 d'un flan voisin, les languettes 100 alignées de la paire C étant diamètralement opposées par rapport à celles de la paire D du fait de la disposition selon l'invention à montage tête-bêche.

Dans cette figure les entretoises 52 sont fragmentées pour s'adapter aux languettes 100.

La liaison en rotation entre les éléments porteurs 34 et le moyeu 10 est réalisée à l'aide d'une pluralité de vis 105 traversant des ouvertures correspondantes des éléments 34 et se vissant dans la bride 102, tandis que les entretoises 47 consistent en des boulons.

La zone d'enracinement 37 comporte une portion radiale 110 évasée pour diminution des contraintes. Tout ceci permet encore d'allonger le bras 29.

En variante les languettes, comme décrit dans le document EP-A-0200 634, peuvent être engagées chacune dans un évidement ouvert d'une couronne s'étendant globablement axialement et solidaire d'une rondelle portant le support, les flans élastiquement déformables étant maintenus, si besoin est, à distance l'un de l'autre par des moyens d'entretoises consistant en des épaulements pratiqués dans lesdits évidements ouverts de ladite couronne et/ou en des anneaux, une rondelle de fermeture venant se fixer par sertissage ou soudage sur l'extrémité libre de la couronne. Cette disposition est également applicable à la figure 1.

Les flans peuvent avoir des éléments porteurs non rigoureusement identiques en étant semblables par leurs bras élastiquement déformables.

Les entretoises 47 peuvent être plates.

Le support 13 peut être fixé directement à un plateau de réaction solidaire du vilebrequin du moteur, le moyeu étant relié à un arbre et à un embrayage.

Les parties excitantes et excitées peuvent être inversées.

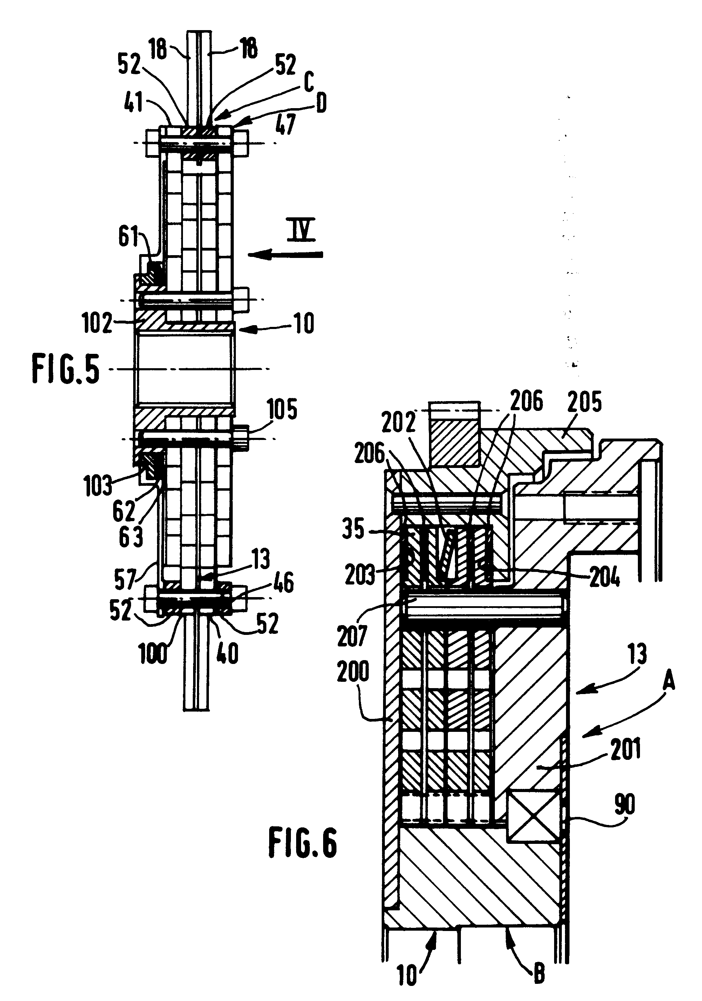

Par exemple le support 13 comme visible à la figure 6 peut être lié à l'une des masses d'inertie d'un double volant amortisseur et former le plateau de réaction, tandis qu'un roulement à billes 90 est interposé radialement entre le moyeu 10, solidaire de l'arbre moteur, et le plateau de réaction 13. Le moyeu 10 est solidarisé à un flasque transversal 200.

Pour formation d'une liaison par coopération de forme le plateau 13 présente à sa périphérie interne un retour axial 201 dans lequel sont usinées des dentures pour coopération sans jeu avec des dentures complémentaires des éléments porteurs internes 34, tandis qu'un élément élastique à action axiale 202 est interposé axialement entre les éléments 35 de la paire C pour sollicitation des flans 40 et 41 en direction respectivement d'une portée radiale 203, formée sur le flasque 200, et d'une portée radiale 204, formée à la faveur d'un rebord radial, d'une masse 205 portant la couronne de démarreur et fixée au flasque 200 ici par rivetage. Les éléments porteurs externes 35 sont d'épaisseur réduite.

Des rondelles de frottement 206 sont interposées entre les flans 40, 41 et les flans 41 et les portées 204, 205.

Le tarage des moyens élastiques 202 est calculé en fonction du couple maximum transmissible par le moteur pour que le couple dû aux rondelles de frottement 206 soit voisin dudit couple maximum en étant de préférence supérieur à celui-ci.

Pour ménager les bras 29 et éviter une venue à spire jointive de ceux-ci, on prévoit des pions 207 diamètralement opposés traversant les fentes prévues entre les bras 29, lesdits pions étant portés par le plateau 13 supportant les garnitures de la friction d'embrayage non visible. Les pions 207 sont destinés à coopérer avec des épaulements que présentent les bras 29. Bien entendu on peut inverser les structures le plateau de réaction 13 portant à sa périphérie externe des dents pour engagements avec des dents complémentaires que présentent les éléments porteurs externes 35, tandis que les portées radiales sont formées respectivement à la périphérie interne du flasque 200 et sur un rebord radial du moyeu 10.

Les pions 207 peuvent être également portés par le flasque 200 et pour cela on se reportera au document de priorité FR-A-2644538.

Les flans peuvent être dotés de plusieurs bras élastiquement déformables comme décrit dans le document US-A-2 141 014.

## Revendications

1. Dispositif amortisseur de torsion, en particulier friction d'embrayage pour véhicule automobile, du genre comportant au moins deux parties coaxiales (A,B), l'une comprenant un support (13), l'autre un moyeu (10), montées rotatives l'une par rapport à l'autre dans les limites d'un débattement angulaire déterminé et à l'encontre de moyens élastiques juxtaposés travaillant en parallèle formés chacun dans un flan élastique (40,41) comportant au moins un bras élastiquement déformable (29) et deux éléments porteurs (34,35), ledit bras élastiquement déformable (29) s'étendant entre les éléments porteurs (34,35) avec l'un au moins desquels il se raccorde d'un seul tenant par une zone d'enracinement (36,37), l'un desdits éléments porteurs (35) étant apte à être solidarisé en rotation avec l'une desdites parties rotatives, tandis que l'autre (34) est apte à être solidarisée en rotation à l'autre desdites parties rotatives, caractérisé en ce qu'il comporte au moins deux paires (C,D) de flans élastiques (40,41) semblables par leurs bras (29) élastiquement déformables, l'une des paires (C) étant encadrée par les flans (41) de l'autre paire (D) et étant décalée angulairement par rapport à l'autre (D) desdites paires en sorte que lesdites paires s'équilibrent radialement, les bras d'une même paire étant phasés.

2. Dispositif selon la revendication 1, caractérisé en ce qu'il comporte deux paires (C,D) de flans (40,41) montées tête-bêche l'une par rapport à l'autre.

3. Dispositif selon la revendication 2, caractérisé en ce qu'il comporte trois paires de flans, chaque paire étant décalée de 120° par rapport à la précédente en l'encadrant.

4. Dispositif selon la revendication 1, caractérisé en ce qu'il comporte quatre paires de flans décalées de 180° les unes par rapport aux autres, chaque paire étant encadrée par la paire suivante.

5. Dispositif selon l'une quelconque des revendications précédentes, caractérisé en ce que l'élément porteur externe (35) comporte en saillie radiale au moins une languette (45,100) pour liaison en rotation avec le support (13).

6. Dispositif selon la revendication 5, caractérisé en ce que la languette (45, 100) est dotée d'au moins une ouverture (46) pour passage d'un organe de fixation (47) liant axialement entre elles les paires (C,D) de flans.

7. Dispositif selon la revendication 6, dans lequel les éléments porteurs interne (34) et externe (35) consistent en des rondelles, caractérisé en ce que la zone d'enracinement (36) du bras (29) à la rondelle externe (35) forme également en saillie radiale une languette pour liaison en rotation avec le support (13) de plus grande dimension circonférentielle.

8. Dispositif selon la revendication 6, dans lequel l'élément porteur interne (34) consiste en une rondelle, caractérisé en ce que l'élément porteur externe (35) consiste en une languette (100) effilée présentant plusieurs ouvertures (46) et se raccordant à la périphérie externe du bras (29) par un congé (101), ladite languette recouvrant partiellement le bras (29) du flan voisin.

9. Dispositif selon l'une quelconque des revendications précédentes, caractérisé en ce que le support (13) est inséré axialement entre les flans (40) de l'une (C) des paires de flans.

10. Dispositif selon l'une quelconque des revendications précédentes, caractérisé en ce que les flans (40,41) sont tous identiques entre eux.

## Patentansprüche

1. Torsionsschwingungsdämpfer, insbesondere Kupplungsscheibe für Kraftfahrzeuge, enthaltend wenigstens zwei koaxiale Teile (A, B), von denen das eine Teil eine Stütze (13), das andere eine Nabe (10) enthält, die im Verhältnis zueinander innerhalb der Grenzen einer bestimmten Winkelverschiebung und gegen elastische Mittel drehbar angeordnet sind, die nebeneinanderliegen und parallel arbeiten und jeweils aus einem elastischen Flansch (40, 41) bestehen, der wenigstens einen elastisch verformbaren Arm (29) und zwei Tragelemente (34, 35) aufweist, wobei sich der elastisch verformbare Arm (29) zwischen den Tragelementen (34, 35) erstreckt, von denen wenigstens eines nahtlos in eine Wurzelzone (36, 37) übergeht, während eines der genannten Tragelemente (35) dazu geeignet ist, drehbeweglich mit einem der genannten rotierenden Teile verbunden zu werden, wohingegen das andere Element (34) geeignet ist, drehbeweglich mit dem anderen der genannten rotierenden Teile verbunden zu werden, **dadurch gekennzeichnet**, daß er wenigstens zwei Paare (C, D) ähnlicher elastischer Flansche (40, 41) durch seine elastisch verformbaren Arme (29) aufweist, wobei das eine der Paare (C) von den Flanschen (41) des anderen Paars (D) umgeben und im Verhältnis zu dem anderen (D) der genannten Paare im Winkel so versetzt ist, daß sich die genannten Paare radial ausgleichen, wobei die Arme des gleichen Paars jeweils phasenweise verlagert sind.

2. Vorrichtung nach Anspruch 1, **dadurch gekennzeichnet**, daß sie zwei Paare (C, D) von Flanschen (40, 41) aufweist, die im Verhältnis zueinander umgekehrt angeordnet sind.

3. Vorrichtung nach Anspruch 2, **dadurch gekennzeichnet**, daß sie drei Paare von Flanschen aufweist, wobei jedes Paar im Verhältnis zum vorherigen, es umgebenden Paar um 120° versetzt ist.

4. Vorrichtung nach Anspruch 1, **dadurch gekennzeichnet**, daß sie vier Paare von Flanschen aufweist, die im Verhältnis zueinander um 180° versetzt sind, wobei jedes Paar von dem darauffolgenden Paar umschlossen wird.

5. Vorrichtung nach einem der vorherigen Ansprüche, **dadurch gekennzeichnet**, daß das äußere Tragelement (35) radial vorspringend wenigstens eine Zunge (45, 100) für die drehbewegliche Verbindung mit der Stütze (13) aufweist.

6. Vorrichtung nach Anspruch 5, **dadurch gekennzeichnet**, daß die Zunge (45, 100) mit wenigstens einer Öffnung (46) für den Durchtritt eines Befestigungsorgans (47) versehen ist, welches die Paare (C, D) von Flanschen axial miteinander verbindet.

7. Vorrichtung nach Anspruch 6, wobei das innere (34) und das äußere (35) Tragelement aus Scheiben bestehen, **dadurch gekennzeichnet**, daß die Wurzelzone (36) des Arms (29) zur äußeren Scheibe (35) radial vorspringend ebenfalls eine Zunge zur drehbeweglichen Verbindung mit der Stütze (13) bildet, die eine größere Umfangsabmessung besitzt.

8. Vorrichtung nach Anspruch 6, wobei das innere Tragelement (34) aus einer Scheibe besteht, **dadurch gekennzeichnet**, daß das äußere Tragelement (35) aus einer konisch zulaufenden Zunge (100) besteht, die mehrere Öffnungen (46) aufweist und über eine Hohlkehle (101) mit der Außenperipherie des Arms (29) verbunden ist, während die genannte Zunge teilweise den Arm (29) des angrenzenden Flanschs bedeckt.

9. Vorrichtung nach einem der vorherigen Ansprüche, **dadurch gekennzeichnet**, daß die Stütze (13) axial zwischen den Flanschen (40) eines der Flanschpaare (C) eingesetzt ist.

10. Vorrichtung nach einem der vorherigen Ansprüche, **dadurch gekennzeichnet**, daß die Flansche (40, 41) untereinander alle identisch sind.

## Claims

1. A torsion damping device, in particular a clutch friction wheel for a motor vehicle, of the kind including at least two coaxial parts (A, B), one of which comprises a support (13) the other a hub (10), mounted for rotation of one with respect to the other within the limits of a predetermined angular displacement and against the action of juxtaposed resilient means working in parallel, with each resilient means being formed in a resilient plate member (40, 41) which comprises at least one resiliently deformable arm (29) together with two carrier elements (34, 35), the said resiliently deformable arm (29) extending between the carrier elements (34, 35), with at least one of which it is joined integrally through a root zone (36, 37), with one of the said carrier elements (35) being adapted to be coupled in rotation with one of the said rotatable parts, while the other one (34) is adapted to be coupled in rotation to the other one of the said rotatable parts, characterised in that it includes at least two pairs (C, D) of resilient plate members (40, 41) similar to each other as to their resiliently deformable arms (29), one of the pairs (C) being sandwiched between the plate members (41) of the other pair (D) and being offset circumferentially with respect to the other one (D) of the said pairs, so that the said pairs are radially balanced, the arms of a said pair being aligned with each other.

2. A device according to Claim 1, characterised in that it includes two pairs (C, D) of plate members (40, 41) mounted in head-to-toe relationship.

3. A device according to Claim 2, characterised in that it includes three pairs of plate members, with each pair being offset by 120° with respect to the preceding pair and being sandwiched within the latter.

4. A device according to Claim 1, characterised in that it includes four pairs of plate members offset by 180° with respect to each other, with each pair being sandwiched within the next following pair.

5. A device according to any one of the preceding Claims, characterised in that the outer carrying element (35) includes at least one radially projecting tongue (45, 100) for rotational coupling with the support (13).

6. A device according to Claim 5e, characterised in that the tongue (45, 100) has at least one aperture (46), for passage therethrough of a fastening member which couples the pairs (C, D) of plate members axially together.

7. A device according to Claim 6, in which the inner carrier element (34) and the outer carrier element (35) consist of rings, characterised in that the root zone (36) of the arm (29) at the outer ring (35) also defines a radially projecting tongue of increased circumferential size, for rotational coupling with the support (13).

8. A device according to Claim 6, in which the inner carrier element (34) consists of a ring, characterised in that the outer carrier element (35) consists of a tapered tongue (100), having a plurality of apertures (46) and being joined to the outer periphery of the arm (29) by means of a neck portion (100), with the said tongue partly covering the arm (29) of the adjacent plate member.

9. A device according to any one of the preceding Claims, characterised in that the support (13) is inserted axially between the plate members (40) of one (C) of the pairs of plate members.

10. A device according to any one of the preceding Claims, characterised in that the plate members (40, 41) are all identical to each other.
